# EUROPEAN PATENT SPECIFICATION

(11) **EP 3 396 287 B1**
(45) Date of publication and mention of the grant of the patent: **08.01.2020**
(21) Application number: 18169671.7
(22) Date of filing: 26.04.2018
(51) Int. Cl.: F27B 9/02, F27B 9/30, F27B 9/36

(54) **A KILN AND METHOD FOR THE FIRING OF BASIC CERAMIC ARTICLES**
OFEN UND VERFAHREN ZUM BRENNEN VON BASIS-KERAMIKARTIKELN
FOUR ET PROCÉDÉ DE CUISSON D'ARTICLES CÉRAMIQUES BASIQUES

(30) Priority: 26.04.2017 IT 201700045233
(43) Date of publication of application: 31.10.2018
(73) Proprietor: SACMI COOPERATIVA MECCANICI IMOLA SOCIETA' COOPERATIVA, 40026 Imola (BO) (IT)
(72) Inventor: VACCARI, Pier Francesco, 40026 IMOLA (BO) (IT); RICCI, Claudio, 40026 IMOLA (BO) (IT); ACERBI, Pierugo, 40026 IMOLA (BO) (IT)
(74) Representative: Seeger, Heiko

(56) References cited:
- DE-A1-102009 042 311
- LU-A1- 41 655
- US-A- 3 009 863

## Description

### TECHNICAL FIELD

The present invention relates to a kiln and a method for the firing of basic ceramic articles. The present invention further relates to a plant and a method for the production of ceramic products.

### CONTEXT OF THE INVENTION

In the field of producing ceramic products, for example tiles and ceramic slabs, it is known to use plants provided with a pressing apparatus, in which basic ceramic articles are obtained starting from a semi-dry mixture (typically the humidity varies from 5 % to 7 %); a decoration device, which decorates the basic ceramic articles; and a sintering kiln, in which the basic ceramic articles are fired at a high temperature so as to obtain first treated articles and then the final ceramic products.

Some sintering kilns of a known type comprise a tunnel and a conveying device for conveying the basic ceramic articles along a given path through the tunnel. The tunnel comprises a pre-heating chamber, a firing chamber and a cooling chamber.

Each of these kilns also comprises a heating device to heat the basic ceramic articles during the conveying of the basic ceramic articles through the firing chamber so as to obtain treated ceramic articles. The heating device is also adapted to preheat the basic ceramic articles from room temperature to the initial temperature during the conveying of the basic ceramic articles through the preheating chamber. The kiln also comprises a cooling device adapted to cool the treated ceramic articles during the conveying through the cooling chamber; and a gas extraction device, which is adapted to extract the gases present in the tunnel at a respective extraction station. Typically, the extraction station is positioned in the area of an input station of the preheating chamber.

Operation of the extraction device determines a flow of the gases present in the tunnel. The hot gases move from the firing chamber towards the extraction station.

In some cases, the decoration device is adapted to decorate an upper surface of the basic ceramic articles (articles pressed, but not fired) by means of digital inkjet printing.

In these cases, the inks used comprise pigments, conductive polar fluids (such as water) and non-polar solvents (organic solvents; oils or other hydrocarbons).

Furthermore, the decoration device can be adapted to apply onto the basic ceramic articles, too, a ground enamel (on which the decoration is then made and) which, in some cases, comprises further non-polar components (hydrocarbons). On average, the decoration device applies from 10 g/m² to 20 g/m² of decorative ink and from 80 g/m² to 150 g/m² of enamel onto the surface of the ceramic objects.

This important quantity of non-polar solvents (organic solvents) evaporates from the basic ceramic articles, which advance through the kiln, and is partially subjected to cracking and reforming, recombining into new chemical compounds (usually smaller molecules), in part combusted and in part dragged by the flow of gas towards the first extraction station. However, the compounds, which are not completely oxidized, are undesired and require further treatments to prevent them from reaching the external environment. These newly formed chemical compounds, which are not completely oxidized, are often characterized by a strong disturbing odoriferous constitution and could also be irritant or even toxic.

One treatment, which is commonly used to reduce these problems, is afterburning of the gases collected by means of a kiln afterburner.

However, such afterburners are bulky and expensive. Furthermore, such afterburners need to process an elevated quantity of the gases produced, with evident plant, energy and maintenance costs.

It is an object of the present invention to provide a kiln and a method for firing basic ceramic articles and a plant for producing ceramic products, which allow to at least partially overcome in a forward and economical manner the drawbacks of the known art.

### SUMMARY

According to the present invention there are provided kilns and a method according to the following independent claims 1, 11 and 8 and, advantageously, according to any one of the claims depending directly or indirectly on the independent claims.

### BRIEF DESCRIPTION OF THE FIGURES

The present invention will now be described with reference to the appended drawings, which illustrate some non-limiting embodiments thereof, wherein:
- figure 1A is a schematic, side view, with parts removed for clarity, of a plant in accordance with the present invention according to a first embodiment;
- figure 1B illustrates the temperatures present in various sections of the kiln of the plant in figure 1A;
- figure 1C illustrates the pressure present in various sections of the kiln of the plant in figure 1A;
- figure 2A is a schematic, side view, with parts removed for clarity, of a second embodiment of the plant in figure 1;
- figure 2B illustrates the temperatures present in various sections of the kiln of the plant in figure 2A; and
- figure 2C illustrates the pressures present in various sections of the kiln of the plant in figure 2A.
- figure 3A is a schematic, side view, with parts removed for clarity, of a third embodiment of the plant in figure 1;
- figure 3B illustrates the temperatures present in various sections of the kiln in the plant in figure 3A; and
- figure 3C illustrates the pressures present in various sections of the kiln of the plant in figure 3A.

### DETAILED DESCRIPTION

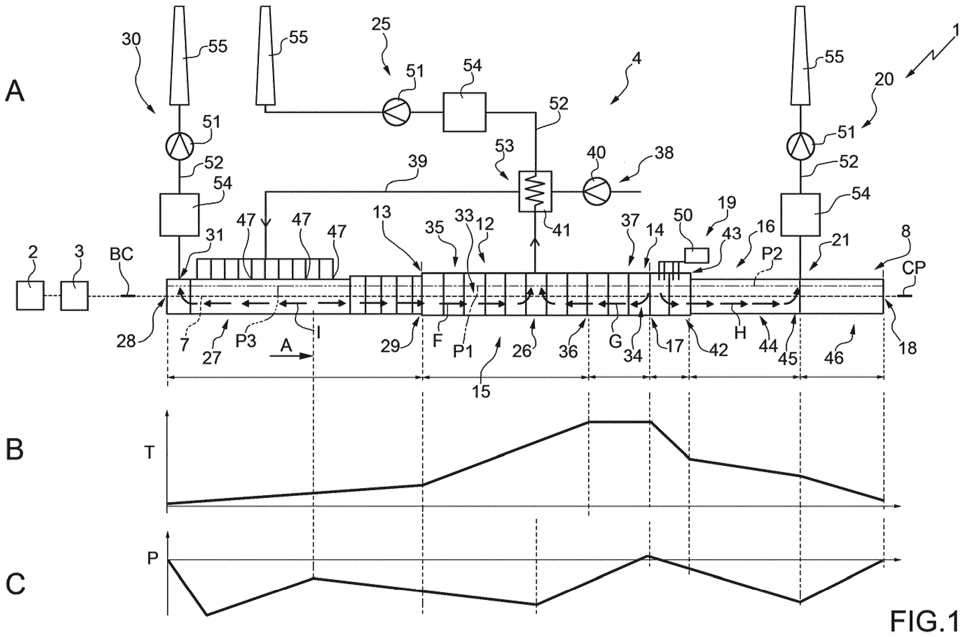

A plant for producing ceramic products CP, such as, for example tiles or ceramic slabs, is globally indicated with 1 in figure 1A. In particular, plant 1 is adapted to obtain basic ceramic articles BC from a semi-dry mixture; ceramic articles treated by means of a treatment (heat treatment-more precisely, firing) of the basic ceramic articles BC; and ceramic products CP by means of a further heat treatment of the treated ceramic articles, in particular, by means of cooling of the treated ceramic articles.

According to some non-limiting embodiments, plant 1 comprises a pressing apparatus 2 (known in itself and not further described) adapted to obtain basic ceramic articles BC (known in themselves) by means of pressing a ceramic powder (a semi-dry mixture, in particular having a humidity, which varies from 5 % to 7 %).

Plant 1 further comprises a decoration device 3, which is adapted to apply a decoration onto the basic ceramic articles BC, in particular onto a surface (upper) of the basic ceramic articles BC; and a kiln 4 (in particular, a tunnel kiln) for the firing of the basic ceramic articles BC so as to obtain first treated ceramic articles and then (by cooling the treated ceramic articles) the final ceramic products CP.

According to some non-limiting embodiments, plant 1 comprises a drying station (known in itself and not illustrated) arranged between pressing apparatus 2 and decoration device 3.

In particular, the basic ceramic articles BC comprise ceramic powder.

Plant 1 further comprises a conveying unit adapted to convey the basic ceramic articles BC from apparatus 2 through device 3 and through at least one portion of kiln 4.

Advantageously but not necessarily, device 3 comprises at least one ink-jet head (ink-jet - known in itself and not illustrated), which is adapted to release one or more jets of ink towards the basic ceramic articles BC, in particular onto the surface of the basic ceramic articles BC, during the conveying thereof through device 3. Preferably, device 3 is also adapted to apply, in particular before the application of the ink, a base enamel onto the basic ceramic articles BC, in particular onto the surface of the basic ceramic articles BC.

In particular, the ink comprises solid particles (inorganic pigments; for example, mixtures of chromophore metal oxides), conductive polar fluids (for example water) and non-polar solvents (organic solvents; for example oils or other hydrocarbons). The ground enamel is provided with further non-polar components (in particular, hydrocarbons).

In particular, device 3 is adapted to apply from 10 g/m² to 20 g/m² of ink and from 80 g/m² to 150 g/m² of ground enamel onto the surface of the basic ceramic articles BC.

More specifically, in use, from 55 % to 65 % liquid components and from 35 % to 45% solid components are applied onto the surface of the basic ceramic articles BC.

Therefore, the basic ceramic articles BC decorated, in use, by device 3, comprise organic compounds, in particular hydrocarbons.

Kiln 4 comprises a conveying device 7 (in particular, a roller conveyor; in particular, having a roller plane) for conveying the basic ceramic articles BC along a given path (in a feeding direction A). In particular, device 7 is part of the above-mentioned conveying unit. Device 7 is schematically illustrated in figure 1 by means of a dashed line.

In particular, kiln 4 (is a tunnel kiln and) presents a firing channel 8, which extends along the given path. More precisely, conveying device 7 extends at least partially within firing channel 8 for conveying the basic ceramic articles BC through firing channel 8.

Kiln 4 comprises at least one firing chamber 12 arranged along the given path and presenting an input station 13 and an output station 14; in particular, device 7 is adapted to convey the basic ceramic articles BC along a first portion P1 of the given path (which extends) from station 13 to station 14.

In particular, unless otherwise stated, when mentioning the temperature of a chamber and/or a part of a chamber, one it is referred to the temperature inside such chamber and/or a zone, measured for example using a suitable sensor (for example a thermocouple) and not to a temperature of the basic ceramic articles BC, the treated ceramic articles and the ceramic products CP.

In particular (with reference to figure 1B), firing chamber 12 is the part of kiln 4, which is characterized in that the internal temperatures increase (gradually) from input station 13 towards output station 14 and remain substantially constant in the area of output station 14.

In particular, the temperatures do not decrease within firing chamber 12 from input station 13 to output station 14.

According to some non-limiting embodiments, in use, the temperatures range from about 200°C to about 400°C in the area of station 13 and from about 1000°C to about 1300°C in the area of station 14.

Kiln 4 further comprises at least one heating device 15 (only partially illustrated in figure 1A), which is adapted to heat the basic ceramic articles BC (from an initial temperature to a firing temperature), while the basic ceramic articles BC themselves are (conveyed) along portion P1 so as to obtain (in particular by means of firing) the treated ceramic articles.

The (main) firing of the basic ceramic articles BC to obtain the treated ceramic articles takes place in firing chamber 12.

In particular, at least a portion (for example, burners) of heating device 15 is arranged in the firing chamber 12.

With particular reference to figure 1B, heating device 15 is configured to heat firing chamber 12 so that the temperatures within firing chamber 12 increase (gradually) from input station 13 towards output station 14, in particular with a gradient presenting a first value. Heating device 15 is further configured to keep the temperature substantially constant in the area of output station 14. Preferably but not necessarily, heating device 15 is also configured to ensure that the temperatures within firing chamber 12 do not decrease between input station 13 and output station 14.

Kiln 4 further comprises at least one cooling chamber 16 arranged downstream of chamber 12 along the given path and presenting an input station 17 and an output station 18; device 7 is adapted to convey the treated ceramic articles along a portion P2 of the given path from station 17 to second station 18; at least one cooling device 19 adapted to reduce the temperature of the treated ceramic articles, while the treated ceramic articles themselves are (conveyed) along portion P2 so as to obtain ceramic products CP; and a gas extraction device 25 configured to extract gas from firing chamber 12 at an extraction station 26, which is interposed between station 13 and station 14, and, in particular, to direct (convey) the gases extracted towards (to) an external environment.

With reference to figure 1B, cooling chamber 16 is characterized by a (continuous) lowering of the internal temperature. In particular, the internal temperature within cooling chamber 16 decreases, in use, starting from the temperature present in the area of output station 14.

Advantageously but not necessarily, kiln 4 further comprises at least one gas extraction device 20, which is adapted to extract gases present within cooling chamber 16 from chamber 16 itself at a respective extraction station 21 (interposed between station 17 and station 18), and, in particular, to direct (convey) the gases extracted towards (to) an external environment.

Advantageously but not necessarily, kiln 4 also comprises at least one preheating chamber 27, which is arranged upstream of firing chamber 12 along the given path, having a respective input station 28 and a respective output station 29.

In particular, heating device 15 is also configured to heat preheating chamber 27 so that the temperatures inside preheating chamber 27 increase (gradually) from input station 28 to output station 29 in particular with a gradient presenting a second value, which is preferably less than the first value of the gradient of the temperature of firing chamber 12. In particular, input station 13 (and also output station 29) is defined by the section, in which the change from the second value of the temperature gradient to the first value of the temperature gradient takes place.

In particular, device 7 is also adapted to convey the basic ceramic articles BC along a third portion P3 of the given path from station 28 to station 29. In particular, device 15 is further adapted to heat the basic ceramic articles BC (from a room temperature) to the initial temperature during the conveying of the basic ceramic articles BC along portion P3 (in other words, during the feeding of the basic ceramic articles BC into preheating chamber 27).

Advantageously but not necessarily, kiln 4 also comprises a gas extraction device 30 adapted to extract gases present within preheating chamber 27 at an extraction station 31 (preheating chamber 27). In particular, station 31 is interposed between input station 28 and output station 29, more specifically in the input station 28.

Advantageously but not necessarily, firing chamber 12 and cooling chamber 16 are connected (without interruption), in particular, directly (in other words, without the interposition of further chambers and/or sections).

In particular, preheating chamber 27 is connected to firing chamber 12 (without interruption), more specifically, directly (in other words, without the interposition of further chambers and/or sections).

In other words, input station 17 is adjacent to output station 14; and input station 13 is adjacent to output station 29.

In particular, firing channel 8 is defined by firing chamber 12, by cooling chamber 16, and, advantageously but not necessarily, by preheating chamber 27.

More precisely, firing chamber 12 comprises a pre-firing section 35 extending from input station 13 to a respective intermediate station 36 of chamber 12, which station 36 is interposed between station 13 and station 14, and a firing section 37 extending from station 36 to output station 14. Preferably, extraction station 26 is interposed between input station 13 and intermediate station 36.

According to some non-limiting embodiments, heating device 15 comprises burners (of a known type and not illustrated), each of which is adapted, in particular, to give off a free flame inside firing channel 8.

More specifically, device 15 comprises burners arranged in firing chamber 12 and, advantageously but not necessarily, also in preheating chamber 27. More precisely, the burners are housed in a side wall, above and below the specified given path (even more precisely, above and below the roller plane of device 7).

Preferably but not necessarily, the density of the burners in firing chamber 12 is greater than the density of the burners in preheating chamber 27, in particular to allow higher temperatures to be obtained within firing chamber 12 than the temperatures within preheating chamber 27.

According to some non-limiting embodiments, the burners, which are arranged in firing chamber 12, in particular in pre-firing section 35 and firing section 37, are positioned along a section of firing chamber 12, which extends from a first station 33 to a second station 34. In particular, first station 33 is interposed between input station 13 and output station 14 close to station 13. In particular, close to input station 13 means that station 33 is closer to input station 13 than output station 14. In particular, second station 34 is arranged in the area of output station 14, more specifically it is interposed between first station 33 and second output station 14.

According to some non-limiting embodiments, heating device 15 is adapted, in particular the burners are adapted, to increase (gradually) the temperature of the basic ceramic articles BC during the conveying of the basic ceramic articles BC themselves between input station 13 and intermediate station 36. In particular, device 15 is adapted to create a temperature gradient within pre-firing section 35 (see figure 1B). More specifically, device 15 is adapted to create a temperature gradient (an increase) (in direction A) from input station 13 to output station 14 (to intermediate station 36); even more specifically, with respective lower temperatures in the area of input station 13 and respective higher temperatures in the area of output station 14.

More precisely, device 15 is adapted to keep the temperature increasing in the direction A in section 35.

Even more precisely, in use, the temperatures are from 200°C to 400°C in the area of station 13 and from 1000°C to 1300°C in the area of station 36. Device 15 is adapted to maintain such temperatures.

Advantageously but not necessarily, device 15 is adapted to keep the temperature in firing section 37 substantially constant (see figure 1B) in feeding direction A. In particular, the temperature in section 37 is from 1000°C to 1300°C.

Device 15 further comprises at least one heat exchanger 38 adapted to interact with extraction device 25, in particular to recover the thermal energy (heat) present in the gases extracted from device 25.

More specifically, exchanger 38 is adapted to reduce the temperature of the gases extracted from device 25 and heat a flow of gas, in particular a flow of air, by means of the thermal energy extracted from the gases extracted from device 25. Exchanger 38 is further adapted to introduce the heated flow of gas (air) into chamber 27 or into the burners of device 15 itself.

More specifically, in the embodiment illustrated in figure 1A, exchanger 38 comprises at least one main duct 39, through which the flow of gas , in particular the air flow, is directed; a fan 40 to create the flow of gas; a heat exchange element 41 adapted to extract the heat from the gases coming from the device and transfer the heat into the flow of gas; and a plurality of discharge tubes 47 to introduce the flow of heated gas into preheating chamber 27.

More precisely, chamber 16 comprises a rapid cooling section 42 extending from station 17 to a rapid final cooling station 43, interposed between input station 17 and output station 18. In particular, section 42 is directly adjacent (without interruption) to (it is immediately downstream of) firing chamber 12, more specifically directly adjacent (in other words, without the interposition of further sections and/or chambers) to output station 14.

Advantageously but not necessarily, chamber 16 also comprises an indirect cooling section 44 arranged downstream of section42 along the given path. In particular, section 44 extends from the rapid final cooling station 43 to an indirect cooling station 45, arranged between station 43 and output station 18.

Advantageously but not necessarily, chamber 16 also comprises a final cooling area 46 arranged downstream of section 42 (more precisely, downstream of indirect cooling section 44) along the given path. In particular, section 46 extends from station 45 to output station 18.

More precisely, cooling device 19 is adapted to determine a temperature gradient in section42; even more precisely, cooling device 19 is adapted to keep the temperature in section 42 decreasing in the direction A. In particular, the temperature at station 17 is from 1000°C to 1300°C (at station 17 the temperature is still substantially identical to the temperature at station 14); and the temperature at station 43 is from 500°C to 700°C.

According to some non-limiting embodiments, cooling device 19 is further adapted to determine a temperature gradient in section 44; more precisely, cooling device 19 is adapted to keep the temperature in section 44 decreasing in direction A. In particular, the temperature at station 43 is from 500°C to 700°C and the temperature at station 45 is from 350°C to 450°C.

Furthermore, device 19 is adapted to determine a temperature gradient in section 46; more precisely, cooling device 19 is adapted to keep the temperature in section 46 decreasing in direction A. In particular, the temperature at station 45 is from 350°C to 450°C and the temperature at station 18 is between 50°C and room temperature (in other words, the temperature of the environment outside of kiln 4) .

In particular, device 19 is configured so that the temperature gradient in section 42 presents a greater slope than the slope of the temperature gradient in section 44. Advantageously but not necessarily, the slope of the temperature gradient in section 42 is greater than the slope of the temperature gradient in section 46. In particular, device 19 is also configured so that the slope of the temperature gradient in section 46 is greater than the slope of the temperature gradient in section 44.

More precisely, cooling device 19 comprises a cooling unit 50, which is fluidically connected in the area of section 42 and adapted to direct (introduce) a cooling fluid, in particular air (cold), into chamber 16, so as to obtain the temperature gradient in section 42. Advantageously but not necessarily, unit 50 is adapted to direct the flow (of air) directly onto the (in direct contact with the) treated ceramic articles during the feeding thereof into (through) section 42. Advantageously but not necessarily, unit 50 comprises one or more blowers of a cooling fluid, in particular cold air.

Advantageously but not necessarily, device 19 also comprises a further cooling unit adapted to cool the treated ceramic articles indirectly during the feeding thereof into section 44. In particular, the further cooling unit presents micro-blowers or heat dissipating tubes.

According to some non-limiting embodiments, device 19 also comprises a further cooling unit to cool the treated ceramic articles indirectly during the feeding thereof into section 46. In particular, the further cooling unit comprises one or more blowers (of a type known in itself and not illustrated) of a cooling fluid, in particular cold air.

Advantageously, extraction device 25 is adapted to generate at least one gas flow G at least from output station 14 to extraction station 26. Preferably but not necessarily, extraction device 25 is also adapted to generate at least one gas flow F at least from input station 13 towards extraction station 26 so that the gases of flow F and the gases of flow G meet (and mix) at station 26 (to obtain a gas mixture).

In particular, the temperature at extraction station 26 is at least 400°C, in particular at least 600°C, even more particular at least 800°C (more precisely, up to 1300°C).

It is important to note that turbulences are created at station 26, due to the combination of flows G and F, which present local uneven temperatures.

Furthermore, such turbulences allow an improvement of the mixing between organic compounds and oxygen and an increase in the residence time of the organic compounds themselves at extraction station 26.

It has been observed experimentally that the structure according to the present invention (thus) allows an improvement in the oxidation of the organic compounds.

In this regard, note that the gases present in chamber 12 comprise organic compounds resulting from evaporation of volatile compounds, in particular non-polar solvents (hydrocarbons), present in the basic ceramic articles BC. More precisely, the non-polar solvents are components of the ink and/or ground enamel applied on the basic ceramic articles BC.

In particular, in use, the non-polar solvents (organic compounds) evaporate from the basic ceramic articles BC.

It should be noted that, in use, a greater portion of the non-polar solvents evaporates from the basic ceramic articles BC in those sections of the chamber 12 in which the temperature exceeds at least 400°C.

The evaporated organic compounds subsequently undergo oxidation. More precisely, a major portion of the organic compounds (at least 70 per cent in weight, preferably at least 80 per cent in weight, even more preferably at least 90 per cent in weight, of the organic compounds) oxidizes before extraction from chamber 12, due to the high temperature present at extraction station 26 and/or due to the fact of being subjected to high temperatures (at least 400°C, in particular at least 600°C, even more in particular at least 800°C) for longer periods. In particular, note that the gases of the flow G go through sections of chamber 12, which are hotter than the sections upstream of extraction station 26.

It has been observed experimentally that turbulence is created at extraction station 26 due to the meeting of flow F with flow G. This further favours complete oxidation of the organic compounds.

The gases present in firing chamber 12 also comprise the fumes from the operation of the burners of device 15 (in other words, the combustion fumes of the combustion gases).

Advantageously but not necessarily, flow F and flow G have opposite directions (paths).

In particular, device 25 comprises a suction unit 51, in particular a fan, fluidically connected to firing chamber 12 at station 26 and adapted to generate at least flow G, preferably also flow F, in particular by means of suction.

According to some non-limiting embodiments, device 25 also comprises a duct 52, connected to chamber 12 at extraction station 26, which is adapted to direct the gases extracted from chamber 12 towards (to) the external environment. More specifically, duct 52 is fluidically connected to the inside of firing chamber 12 by means of at least one opening in a wall of firing chamber 12 (in particular, in an upper wall and/or in a base wall of firing chamber 12).

Advantageously but not necessarily, suction unit 51 is arranged along duct 52.

According to some non-limiting embodiments, duct 52 is configured so as to interact with exchanger 38 at a heat exchanging station 53.

Advantageously but not necessarily, device 25 also comprises a filtering unit 54 (known as such) adapted to filter the gases extracted from firing chamber 12. In particular, unit 54 is connected to (more precisely, is arranged along) conduct 52. More specifically, unit 54 is arranged downstream of heat exchanging station 53 (and upstream of suction unit 51).

According to some non-limiting embodiments, device 25 also comprises an outlet chimney 55 fluidically connected to duct 52 to direct the gases towards the external environment (to the external environment).

Extraction device 20 is similar to device 25 and is thus described hereafter limited to the differences in relation to device 25, indicating parts, which are equal or equivalent to parts already described for device 25, with the same reference numbers.

In particular, device 20 is adapted to generate at least a gas flow H from input station 17 to extraction station 21. More specifically, flow H has an opposite direction (path) to the direction of flow G.

Device 30 is similar to device 25 (and also to device 20) and is thus described hereafter limited to the differences in relation to device 25 (and also device 30), indicating parts, which are equal or equivalent to parts already described with the same reference numbers.

In particular, device 30 is adapted to generate at least a gas flow I inside preheating chamber 27 (from the output station 29) to extraction station 31. More specifically, the flow I has an opposite direction (path) to the direction of flow F.

According to some non-limiting embodiments, kiln 4 also comprises a control unit (not illustrated) adapted to control the operation of kiln 4 itself.

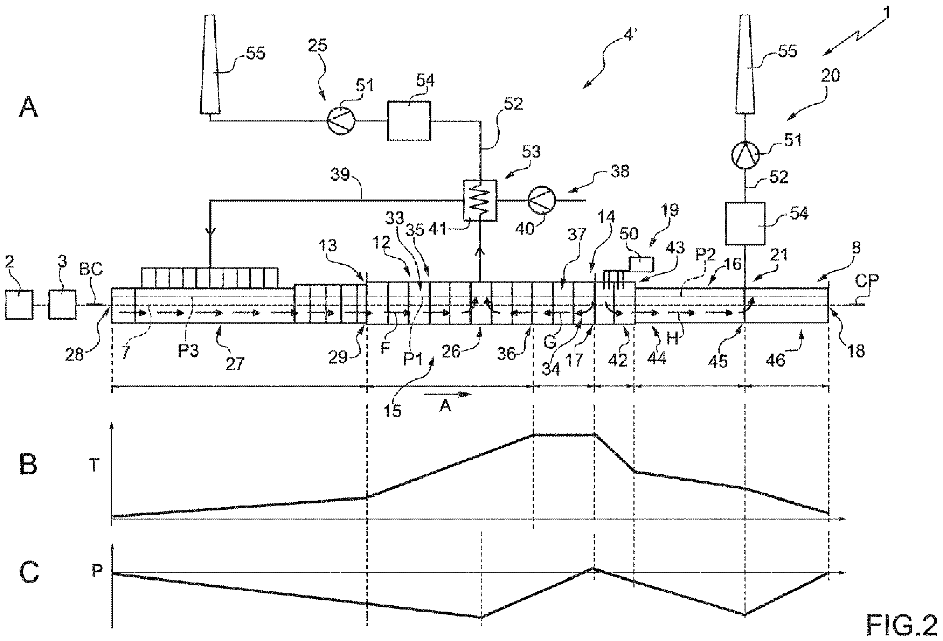

Advantageously but not necessarily, the control unit is adapted to control extraction device 30 so as to activate it and deactivate it. In particular, in use, when device 30 is active, it generates flow I (figure 1A); when device 30 is not active, flow I is not generated. More specifically, in use, when device 30 is not active, flow F generated by device 25 extends from input station 28 to extraction station 26 (similar situation is illustrated in figure 2A).

According to a further aspect of the present invention, a method is provided for producing ceramic products CP (such as, for example tiles or ceramic slabs). In particular, the ceramic products CP are obtained (from plant 1) by treating the basic ceramic articles BC. More specifically, the basic ceramic articles BC are heated (fired) to obtain treated ceramic articles and the cooling of the treated ceramic articles results in the ceramic products CP.

More precisely, the method of producing the ceramic products CP comprises at least one step of preparing the basic ceramic articles BC, at least one decoration step and at least one treatment step.

In particular, during the preparation step the basic ceramic articles BC are produced by pressing a non-compacted ceramic material (comprising ceramic powder). More specifically, the preparation step is carried out by apparatus 2.

During the decoration step at least one ink is applied, in particular by device 3, onto the basic articles, in particular onto the surface thereof. Advantageously but not necessarily, during the decoration step, a ground enamel is also applied, in particular by device 3, onto the basic ceramic articles BC, in particular onto the surface thereof. More specifically, the ground enamel is applied before the application of the ink.

The treatment step comprises the firing of the basic ceramic articles BC, in particular in kiln 4, to obtain the treated ceramic articles from whose cooling one obtains the ceramic products CP.

The method comprises also at least one transport step during which the basic ceramic articles BC are conveyed from pressing apparatus 2 to kiln 4 (through the decoration device 3) .

According to a further aspect of the present invention a method for firing the basic ceramic articles BC is also provided. In particular, such method corresponds to the (is the) treatment step.

The method for firing the basic ceramic articles BC comprises: a first conveying step, during which the basic ceramic articles BC are conveyed through at least one firing chamber 12 along a portion P1 of the given path from an input station 13 to an output station 14; a heating step, during which the basic ceramic articles BC are heated (from an initial temperature to a firing temperature), while they are (conveyed) along the portion P1 so as to obtain the treated ceramic articles; a second conveying step, during which the treated ceramic articles are conveyed through at least one cooling chamber 16 along the portion P2 of the given path from input station 17 to output station 18; a cooling step, during which the temperature of the treated ceramic articles is reduced while they are conveyed along the portion P2 of the given path so as to obtain the ceramic products CP.

The method further comprises at least a first extraction step, during which the gases present in firing chamber 12 are extracted (in particular by means of device 25) from firing chamber 12 itself at extraction station 26 (interposed between first input station 13 and first output station 14).

During the first extraction step, at least gas flow G is obtained at least from output station 14 to extraction station 26.

Preferably but not necessarily, during the first extraction step, also gas flow F is obtained from at least input station 13 to extraction station 26 and the gases from gas flow F and the gases from gas flow G meet (and mix) at station 26 (obtaining a mixture of gases having a temperature of at least 400°C, in particular of at least 600°C, even more in particular of at least 800°C). At extraction station 26 there is a temperature of at least 400°C, in particular of at least 600°C, even more in particular of at least 800°C.

Advantageously but not necessarily, the firing method also comprises at least a second gas extraction step, during which the gases present in cooling chamber 16 are extracted (in particular, by device 20) from cooling chamber 16 at extraction station 21.

More specifically, during the step of heating the organic compounds (hydrocarbons, for example solvents) they evaporate from the basic ceramic articles BC and form new organic compounds, partially oxidizing. During the heating step, the oxidation of the organic compounds is substantially completed.

During the heating step, device 15 heats (internally) firing chamber 12. More precisely, during the heating step, the burners burn combustion gas.

In particular, during the heating step in section 35 the temperature increases (a temperature gradient is created) from input station 13 to intermediate station 36.

According to some non-limiting embodiments, the temperature is kept from 200°C to 400°C at station 13 and from 1000°C to 1300°C at station 36. Furthermore, during the heating step, a substantially constant temperature is set in firing section 37, in particular from 1000°C to 1300°C.

Advantageously but not necessarily, the heating step comprises a sub-step of heat exchange. In particular, during the sub-step of heat exchange, thermal energy is extracted (by means of exchanger 38) from the gases removed from chamber 12 (in particular, during the first extraction step) so as to heat a flow of a fluid (air), which, advantageously but not necessarily, is introduced into preheating chamber 27 or into the burners of device 15.

According to some non-limiting embodiments, during the cooling step, chamber 16 is cooled, in particular, heat is removed from the inside of chamber 16. In particular, the cooling step comprises a sub-step of rapid cooling, during which a temperature gradient is generated within section 42. More specifically, there is a temperature from 1000°C to 1300°C at station 17 and a temperature from 500°C to 700°C at station 43.

Advantageously but not necessarily, during the sub-step of rapid cooling, a cooling fluid (in particular air) is directed into section 42. In some cases, during the sub-step of rapid cooling, the cooling fluid is directed towards (against) the basic ceramic articles BC, in particular onto the surface of the basic ceramic articles BC.

According to some non-limiting embodiments, the cooling step also comprises a sub-step of indirect cooling (in particular, carried out after the sub-step of rapid cooling), during which the treated ceramic articles are cooled indirectly (and slowly) within section 44, in particular, using mini-blowers and/or heat dissipating pipes.

According to some non-limiting embodiments, the cooling step also comprises a sub-step of final cooling (in particular, carried out after the sub-step of indirect cooling), during which the treated ceramic articles are cooled by introducing cooling fluid (in particular cold air) into section 46.

More precisely, during the first extraction step, unit 51 is activated to obtain at least gas flow G, preferably also gas flow F. In particular, by means of activating unit 51 the gases are removed (by suction) from chamber 12 and directed towards the external environment.

During the first extraction step, a sub-step of filtering is also carried out, during which the gases extracted from firing chamber 12 are filtered, in particular, into unit 54.

Typically, due to the extraction of gases from kiln 4, during operation of kiln 4 (in particular, due to the extraction of gases from firing chamber 12 and from cooling chamber 16) a pressure profile is obtained in kiln 4, as illustrated in Figure 1C. The pressure falls from input station 28 in the direction A until a first intermediate section of preheating chamber 27, after which it begins to rise and then falls again until extraction station 26; the pressure increases from station 26 to output station 14 and falls from station 14 to extraction station 21; the pressure rises again from station 21 to output station 18.

Advantageously but not necessarily (during the treatment step), a third conveying step is comprised during which the basic ceramic articles BC are conveyed through preheating chamber 27, along portion P3 of the given path from input station 28 to output station 29. A further heating step is also comprised during which the basic ceramic articles BC are heated from a room temperature to an initial temperature as they advance along portion P3. According to some non-limiting embodiments, a third gas extraction step is also comprised, during which gases present within preheating chamber 27 are extracted from chamber 27 itself.

In particular, the flow I is generated during the second extraction step.

Advantageously but not necessarily, the firing method of the basic ceramic articles BC and the method for producing ceramic products CP are implemented by kiln 4 (or 4' or 4") and by plant 1, respectively.

An alternative and advantageous embodiment of a kiln according to the present invention is indicated with number 4' in figure 2A. Kiln 4' is similar to kiln 4 and is thus described hereafter limited to the differences in relation to kiln 4, indicating parts, which are equal or equivalent to parts already described for kiln 4.

In particular, kiln 4' differs from kiln 4 in that it does not comprise device 30. In this embodiment, gas flow F substantially extends from input station 28 to extraction station 26. Furthermore, the operation of kiln 4' is similar to the operation of kiln 4 with the difference that a flow I is not generated.

In this case (figure 2C), the pressure falls from input station 28 to intermediate station 26, rises from station 26 to output station 14, falls from station 14 to extraction station 21 and rises again from station 21 to output station 18.

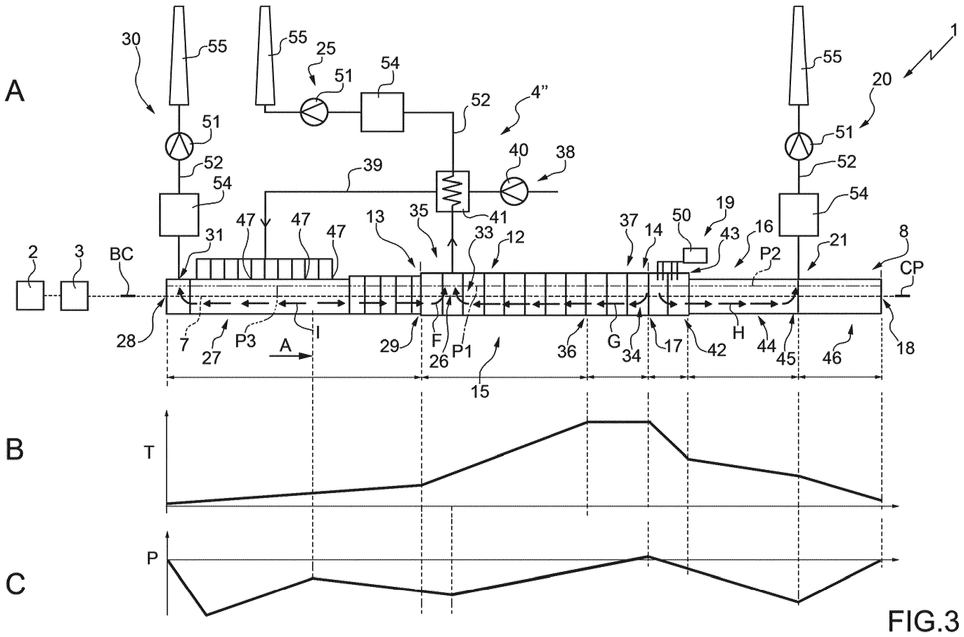

An alternative and advantageous embodiment of a kiln according to the present invention is indicated with number 4" in figure 3A. Kiln 4" is similar to kiln 4 and is thus described hereafter limited to the differences in relation to kiln 4, indicating parts, which are equal or equivalent to parts already described for kiln 4 with the same reference numbers.

In particular, kiln 4" differs from kiln 4 in that station 26 is arranged within firing chamber 12, in particular within section 35, in the proximity of (in the area of) station 13. In particular, in the proximity of input station 13 means that extraction station 26 is closer to input station 13 than to output station 14.

In particular, extraction station 26 is arranged in a section of firing chamber 12, in which section the temperature is from 500°C to 800°C, in particular from 600°C to 800°C. More specifically, such section is arranged in pre-firing section 35.

In the non-limiting embodiment illustrated in figure 3A, a greater portion of the organic compounds evaporates, in use, in a section of chamber 12 arranged downstream of station 26. In particular, this happens due to the higher temperatures present in this section.

The applicant has found that this embodiment allows the organic compounds present in flow G to be exposed to temperatures of at least 400°C, preferably of at least 600°C, for longer, thus favouring oxidation of the organic compounds. In particular, the positioning of the extraction station 26 in the proximity of (in the area of) input station 13 allows the distance between station 26 and output station 14 to be maximized.

In a further embodiment, which is not illustrated, the kiln is similar to kiln 4' with the difference that the station 26 is arranged as in the case of kiln 4"; in other words, station 26 is arranged in firing chamber 12, in particular, in section 35, at station 13, in particular, in a section, where the temperature is from 500°C to 800°C, in particular, from 600°C to 800°C.

Kilns 4, 4' and 4", plant 1, the method for producing ceramic products CP and the method for firing basic ceramic articles BC described above (according to the present invention) present several advantages with respect to the state-of-the-art.

In particular, the use of large afterburners is not required. In this regard, note that most of the new organic compounds are oxidized at extraction station 26, when the flows G and F meet. This allows a reduction in the costs of the kilns, system costs, energy costs and maintenance.

Note that kiln 4' presents lower risks (compared to kiln 4) of operational instability and the emission of malodorous (or potentially harmful) products. In this regard, note that if the working of extraction devices 30 and 25 were to be regulated incorrectly in kiln 4 and device 30 were to override device 25, a part of the organic compounds not completely oxidized could come out of kiln 4 and be released into the atmosphere.

According to some non-illustrated embodiments, the extraction device 25 also comprises an afterburner adapted to carry out further heat treatment of the gases extracted from chamber 12, in particular, to reduce further traces of organic compounds, not completely oxidized, possibly still present in the gases extracted from the firing chamber 12. However, such afterburner is significantly smaller than the afterburners, which should be used in conjunction with the kilns currently known for firing basic ceramic articles BC. An afterburner used with extraction device 25 is smaller since the quantity and/or concentration of the new organic compounds is lower due to the additional oxidation of the gas mixture in extraction station 26.

A kiln provided with an extraction device 25 and a small afterburner would nonetheless be advantageous in terms of construction costs, energy costs and maintenance costs. Nonetheless, the preferred embodiments comprise that kiln 4, in particular device 25, is not provided with an afterburner.

## Claims

1. A kiln (4'') for the firing of basic ceramic articles (BC) comprising organic compounds;
the kiln (4") comprises:
- a conveying device (7) for conveying the basic ceramic articles (BC) and treated ceramic articles along a given path;
- at least one firing chamber (12), which is arranged along the given path and has a first input station (13) and a first output station (14); the conveying device (7) is adapted to convey the basic ceramic articles (BC) along a first portion (P1) of the given path from the first input station (13) to the first output station (14);
- at least one heating device (15), which is adapted to heat the basic ceramic articles (BC) while the basic ceramic articles (BC) are along the first portion (P1) of the given path, so as to obtain the treated ceramic articles;
- at least one cooling chamber (16), which is arranged downstream of the firing chamber along the given path and has a second input station (17) and a second output station (18); the conveying device (7) is adapted to convey the treated ceramic articles along a second portion (P2) of the given path; the second portion (P2) extending from the second input station (17) to the second output station (18);
- at least one cooling device (19), which is adapted to reduce the temperature of the treated ceramic articles while they are along the second portion (P2), so as to obtain ceramic products (CP);
wherein the kiln (4") comprises at least one first gas extraction device (25), which is adapted to extract gas from the firing chamber (12) at a first extraction station (26), which is interposed between the first input station (13) and the first output station (14) and is adapted to direct the extracted gas towards an external environment;
the kiln (4'') being **characterized in that** the first extraction device (25) is adapted to generate a first gas flow (F) from at least the first input station (13) towards the first extraction station (26) and a second gas flow (G) from at least the first output station (14) to the first extraction station (26), so that the gases of the first gas flow (F) and the gases of the second gas flow (G) meet at the first extraction station (26), in whose area there is, in use, a temperature of at least 400°C, in particular at least 600°C, more in particular at least 800°C;
the first extraction station (26) being arranged at the first input station (13).

2. The kiln according to claim 1, wherein the first extraction station (26) is arranged in a stretch of the firing chamber (12) in which the temperature is, in use, between 500°C and 800°C, in particular between 600°C and 800°C.

3. The kiln according to claim 1 or 2, wherein the first extraction device (25) comprises a suction unit (51), which is fluidically connected to the firing chamber (12) in the area of the first extraction station (26) and is adapted to generate the first gas flow (F) and the second gas flow (G), in particular the first gas flow (F) has a first direction and the second has flow (G) has a second direction, which is opposite to the first direction.

4. The kiln according to any one of the preceding claims, and comprising at least one second gas extraction device (20), which is adapted to extract gas from the cooling chamber (16) in the area of a second extraction station (21); the second extraction device (20) is adapted to generate a third gas flow (H) from the second input station (17) to the second extraction station (21).

5. The kiln according to any one of the preceding claims, wherein the firing chamber (12) comprises a pre-firing section (35) extending from the first input station (13) to a first intermediate station (36) of the firing chamber, being arranged between the first input station (13) and the first output station (14);
the heating device (15) is adapted to increase the temperature of the basic ceramic articles (BC) during advancement between the first input station (13) and the first intermediate station (36), in particular the heating device (15) is adapted to keep the temperature of the pre-firing section (35) increasing in a feeding direction (A) of the basic ceramic articles (BC) along the given path; the first extraction station (26) is interposed between the first input station (13) and the first intermediate station (36); in particular the firing chamber (12) also comprises a firing section (37) extending from the first intermediate station (36) to the first output station (14) of the heating chamber (12) and the heating device (15) is adapted to keep the temperature of the firing section (37) substantially constant in the feeding direction (A); in particular between 1000°C and 1300°C.

6. The kiln according to any one of the preceding claims, comprising at least one pre-heating chamber (27), which is arranged upstream of the firing chamber (12) along the given path and has a third input station (28) and a third output station (29);
the conveying device (7) is adapted to convey the basic ceramic articles (BC) along a third portion (P3) of the given path from the third input station (28) to the third output station (29);
the heating device (15) is further adapted to heat the basic ceramic articles (BC) from a room temperature to the initial temperature while the basic ceramic articles (BC) are being conveyed along the third portion (P3);
the kiln comprises, furthermore, at least one third gas extraction device (30), which is adapted to extract gases from the pre-heating chamber (27) in the area of a third extraction station (31) of the pre-heating chamber (27); in particular, the kiln (4'') also comprises a control unit, which is adapted to control the third extraction device (30) so as to activate and deactivate the third extraction device (30) .

7. A plant for the production of ceramic products (CP) starting from basic ceramic articles (BC); the plant (1) comprises a decoration unit (3) adapted to decorate the basic ceramic articles (BC) with an ink comprising organic compounds, and a kiln (4'') according to any one of the preceding claims.

8. A method for the firing of basic ceramic articles (BC) comprising organic compounds, the method comprises:
- a first conveying step, during which the basic ceramic articles (BC) are conveyed through at least one firing chamber (12) along a first portion (P1) of the given path from a first input station (13) to a first output station (14);
- a heating step, during which the basic ceramic articles (BC) are heated while they are along the first portion (P1) of the given path, so as to obtain treated ceramic articles;
- a second conveying step, during which the treated ceramic articles are conveyed through at least one cooling chamber (16) along a second portion (P2) of the given path from a second input station (17) to a second output station (18) of the cooling chamber (16);
- a cooling step, during which the temperature of the treated ceramic articles is reduced while they are along the second portion (P2) of the given path, so as to obtain ceramic products (CP);
the method comprises at least one first gas extraction step, during which gases present in the firing chamber (12) are extracted from the firing chamber (12) at a first extraction station (26) interposed between the first input station (13) and the first output station (14);
wherein the first extraction station (26) is arranged at the first input station (13); in particular in a stretch of the firing chamber (12) in which the temperature is, in use, between 500°C to 800°C, in particular between 600°C to 800°C;
wherein during the first extraction step, there is the production of a first gas flow (F) from the first input station (13) to the first extraction station (26) and of a second gas flow (G) from the first output station (14) to the first extraction station (26); during the first extraction step, the gases of the first gas flow (F) and the gases of the second gas flow (G) meet in the area of the first extraction station (26), in whose area there is a temperature of at least 400°C, in particular at least 600°C, more in particular at least 800°C.

9. The method according to claim 8 and comprising at least one second gas extraction step, during which gases present in the cooling chamber (16) are extracted from the cooling chamber (16) in the area of a second extraction station (21); during the second extraction step, there is the production of a third gas flow (H) from the second input station (17) to the second extraction station (21).

10. The method according to claim 8 or 9 and comprising:
a third conveying step, during which the basic ceramic articles (BC) are conveyed through at least one pre-heating chamber (27) along a third portion (P3) of the given path from a third input station (28) to a third output station (29) ;
a further heating step, during which the basic ceramic articles (BC) are heated from a room temperature to an initial temperature while they are being fed along the third portion (P3) of the given path; and
a third gas extraction step, during which gases are extracted from the pre-heating chamber (27).

11. A kiln (4") for the firing of basic ceramic articles (BC) comprising organic compounds;
the kiln (4") comprises:
- a conveying device (7) for conveying the basic ceramic articles (BC) and treated ceramic articles along a given path;
- at least one firing chamber (12), which is arranged along the given path and has a first input station (13) and a first output station (14); the conveying device (7) is adapted to convey the basic ceramic articles (BC) along a first portion (P1) of the given path from the first input station (13) to the first output station (14);
- at least one heating device (15), which is adapted to heat the basic ceramic articles (BC) while the basic ceramic articles (BC) are along the first portion (P1) of the given path, so as to obtain the treated ceramic articles;
- at least one cooling chamber (16), which is arranged downstream of the firing chamber along the given path and having a second input station (17) and a second output station (18); the conveying device (7) is adapted to convey the treated ceramic articles along a second portion (P2) of the given path; the second portion (P2) extending from the second input station (17) to the second output station (18);
- at least one cooling device (19), which is adapted to reduce the temperature of the treated ceramic articles while they are along the second portion (P2), so as to obtain ceramic products (CP);
**characterized in that** the kiln (4") comprises at least one first gas extraction device (25), which is configured to extract gas from the firing chamber (12) at a first extraction station (26), which is interposed between the first input station (13) and the first output station (14) and at the first input station (13); and to direct the extracted gas towards an external environment;
the first extraction device (25) is adapted to generate a first gas flow (G) from at least the first output station (14) to the first extraction station (26);
wherein at the first extraction station (26) there is a temperature of at least 400°C, in particular of at least 600°C.

12. The kiln according to claim 11, wherein the first extraction station (26) is arranged in a stretch of the firing chamber (12) in which there is, in use, a temperature between 500°C and 800°C, in particular between 600°C and 800°C.

13. A plant for the production of ceramic products (CP) starting from basic ceramic articles (BC); the plant (1) comprises a decoration unit (3) adapted to decorate the basic ceramic articles (BC) with an ink comprising organic compounds, and a kiln (4") according to claim 11 or 12.

## Patentansprüche

1. Ofen (4") zum Brennen von Basis-Keramikartikeln (BC), welche organische Verbindungen umfassen;
wobei der Ofen (4") umfasst:
- eine Fördereinrichtung (7) zum Fördern der Basis-Keramikartikel (BC) und von behandelten Keramikartikeln entlang eines gegebenen Pfads;
- mindestens eine Brennkammer (12), welche entlang des gegebenen Pfads angeordnet ist und eine erste Eingabestation (13) und eine erste Ausgabestation (14) aufweist, wobei die Fördereinrichtung (7) dazu ausgebildet ist, die Basis-Keramikartikel (BC) entlang eines ersten Abschnitts (P1) des gegebenen Pfads von der ersten Eingabestation (13) zu der ersten Ausgabestation (14) zu fördern;
- mindestens eine Heizeinrichtung (15), welche dazu ausgebildet ist, die Basis-Keramikartikel (BC) zu erwärmen, während sich die Basis-Keramikartikel (BC) entlang des ersten Abschnitts (P1) des gegebenen Pfads befinden, um die behandelten Keramikartikel zu erhalten;
- mindestens eine Kühlkammer (16), welche stromabwärts der Brennkammer entlang des gegebenen Pfads angeordnet ist und eine zweite Eingabestation (17) und eine zweite Ausgabestation (18) aufweist, wobei die Fördereinrichtung (7) dazu ausgebildet ist, die behandelten Keramikartikel entlang eines zweiten Abschnitts (P2) des gegebenen Pfads zu fördern, wobei der zweite Abschnitt (P2) sich von der zweiten Eingabestation (17) zu der zweiten Ausgabestation (18) erstreckt;
- mindestens eine Kühleinrichtung (19), welche dazu ausgebildet ist, die Temperatur der behandelten Keramikartikel zu reduzieren, während diese sich entlang des zweiten Abschnitts (P2) befinden, um Keramikprodukte (CP) zu erhalten;
wobei der Ofen (4") mindestens eine erste Gasextraktionseinrichtung (25) umfasst, welche dazu ausgebildet ist, Gas aus der Brennkammer (12) an einer ersten Extraktionsstation (26), welche zwischen der ersten Eingabestation (13) und der ersten Ausgabestation (14) angeordnet ist, zu extrahieren und dazu ausgebildet ist, das extrahierte Gas zu einer äußeren Umgebung hin zu richten;
wobei der Ofen (4") **dadurch gekennzeichnet ist, dass** die erste Extraktionseinrichtung (25) dazu ausgebildet ist, einen ersten Gasstrom (F) von mindestens der ersten Eingabestation (13) zu der ersten Extraktionsstation (26) hin und einen zweiten Gasstrom (G) von mindestens der ersten Ausgabestation (14) zu der ersten Extraktionsstation (26) zu erzeugen, so dass die Gase des ersten Gasstroms (F) und die Gase des zweiten Gasstroms (G) an der ersten Extraktionsstation (26) zusammentreffen, in deren Bereich im Gebrauch eine Temperatur von mindestens 400 °C, insbesondere mindestens 600 °C, speziell mindestens 800 °C, herrscht;
wobei die erste Extraktionsstation (26) an der ersten Eingabestation (13) angeordnet ist.

2. Ofen nach Anspruch 1, wobei die erste Extraktionsstation (26) in einem Abschnitt der Brennkammer (12) angeordnet ist, in dem die Temperatur im Gebrauch zwischen 500 °C und 800 °C, insbesondere zwischen 600 °C und 800 °C liegt.

3. Ofen nach Anspruch 1 oder 2, wobei die erste Extraktionseinrichtung (25) eine Saugeinheit (51) umfasst, welche im Bereich der ersten Extraktionsstation (26) mit der Brennkammer (12) in Fluidverbindung steht und dazu ausgebildet ist, den ersten Gasstrom (F) und den zweiten Gasstrom (G) zu erzeugen, wobei insbesondere der erste Gasstrom (F) eine erste Richtung aufweist und der zweite Gasstrom (G) eine zweite Richtung aufweist, welche der ersten Richtung entgegengesetzt ist.

4. Ofen nach einem der voranstehenden Ansprüche, umfassend mindestens eine zweite Gasextraktionseinrichtung (20), welche dazu ausgebildet ist, Gas im Bereich einer zweiten Extraktionsstation (21) aus der Kühlkammer (16) zu extrahieren, wobei die zweite Extraktionseinrichtung (20) dazu ausgebildet ist, einen dritten Gasstrom (H) von der zweiten Eingabestation (17) zu der zweiten Extraktionsstation (21) zu erzeugen.

5. Ofen nach einem der voranstehenden Ansprüche, wobei die Brennkammer (12) einen Vorbrennabschnitt (35) umfasst, welcher sich von der ersten Eingabestation (13) zu einer ersten Zwischenstation (36) der Brennkammer erstreckt, welche zwischen der ersten Eingabestation (13) und der ersten Ausgabestation (14) angeordnet ist;
die Heizeinrichtung (15) dazu ausgebildet ist, die Temperatur der Basis-Keramikartikel (BC) während der Beförderung zwischen der ersten Eingabestation (13) und der ersten Zwischenstation (36) zu erhöhen, wobei insbesondere die Heizeinrichtung (15) dazu ausgebildet ist, die Temperatur des Vorbrennabschnitts (35) in einer Zuführrichtung (A) der Basis-Keramikartikel (BC) entlang des gegebenen Pfads ansteigend zu halten, wobei die erste Extraktionsstation (26) zwischen der ersten Eingabestation (13) und der ersten Zwischenstation (36) angeordnet ist, wobei insbesondere die Brennkammer (12) auch einen Brennabschnitt (37) umfasst, welcher sich von der ersten Zwischenstation (36) zu der ersten Ausgabestation (14) der Heizkammer (12) erstreckt, und wobei die Heizeinrichtung (15) dazu ausgebildet ist, die Temperatur des Brennabschnitts (37) in der Zuführrichtung (A) im Wesentlichen konstant zu halten, insbesondere zwischen 1000 °C und 1300 °C.

6. Ofen nach einem der voranstehenden Ansprüche, umfassend mindestens eine Vorwärmkammer (27), welche stromaufwärts der Brennkammer (12) entlang des gegebenen Pfads angeordnet ist und eine dritte Eingabestation (28) und eine dritte Ausgabestation (29) aufweist;
wobei die Fördereinrichtung (7) dazu ausgebildet ist, die Basis-Keramikartikel (BC) entlang eines dritten Abschnitts (P3) des gegebenen Pfads von der dritten Eingabestation (28) zu der dritten Ausgabestation (29) zu fördern;
die Heizeinrichtung (15) ferner dazu ausgebildet ist, die Basis-Keramikartikel (BC) von einer Raumtemperatur auf die Anfangstemperatur zu erwärmen, während die Basis-Keramikartikel (BC) entlang des dritten Abschnitts (P3) gefördert werden;
der Ofen ferner mindestens eine dritte Gasextraktionseinrichtung (30) umfasst, welche dazu ausgebildet ist, Gase im Bereich einer dritten Extraktionsstation (31) der Vorwärmkammer (27) aus der Vorwärmkammer (27) zu extrahieren, wobei insbesondere der Ofen (4") auch eine Steuereinheit umfasst, welche dazu ausgebildet ist, die dritte Extraktionseinrichtung (30) zu steuern, um die dritte Extraktionseinrichtung (30) zu aktivieren und zu deaktivieren.

7. Anlage zur Herstellung von Keramikprodukten (CP) ausgehend von Basis-Keramikartikeln (BC), wobei die Anlage (1) umfasst: eine Dekorationseinheit (3), welche dazu ausgebildet ist, die Basis-Keramikartikel (BC) mit einer Tinte, welche organische Verbindungen umfasst, zu dekorieren, und einen Ofen (4") nach einem der voranstehenden Ansprüche.

8. Verfahren zum Brennen von Basis-Keramikartikeln (BC), welche organische Verbindungen umfassen, das Verfahren umfassend:
- einen ersten Förderschritt, während dem die Basis-Keramikartikel (BC) durch mindestens eine Brennkammer (12) hindurch entlang eines ersten Abschnitts (P1) des gegebenen Pfads von einer ersten Eingabestation (13) zu einer ersten Ausgabestation (14) gefördert werden;
- einen Heizschritt, während dem die Basis-Keramikartikel (BC) erwärmt werden, während sie sich entlang des ersten Abschnitts (P1) des gegebenen Pfads befinden, um behandelte Keramikartikel zu erhalten;
- einen zweiten Förderschritt, während dem die behandelten Keramikartikel (BC) durch mindestens eine Kühlkammer (16) hindurch entlang eines zweiten Abschnitts (P2) des gegebenen Pfads von einer zweiten Eingabestation (17) zu einer zweiten Ausgabestation (18) der Kühlkammer (16) gefördert werden;
- einen Kühlschritt, während dem die Temperatur der behandelten Keramikartikel reduziert wird, während diese sich entlang des zweiten Abschnitts (P2) des gegebenen Pfads befinden, um Keramikprodukte (CP) zu erhalten;
- wobei das Verfahren mindestens einen ersten Gasextraktionsschritt umfasst, während dem in der Brennkammer (12) vorhandene Gase an einer ersten Extraktionsstation (26), welche zwischen der ersten Eingabestation (13) und der ersten Ausgabestation (14) angeordnet ist, aus der Brennkammer (12) extrahiert werden;
- wobei die erste Extraktionsstation (26) an der ersten Eingabestation (13) angeordnet ist, insbesondere in einem Abschnitt der Brennkammer (12), in dem die Temperatur im Gebrauch zwischen 500 °C bis 800 °C, insbesondere zwischen 600 °C bis 800 °C, liegt;
- wobei während des ersten Extraktionsschritts ein erster Gasstrom (F) von der ersten Eingabestation (13) zu der ersten Extraktionsstation (26) und ein zweiter Gasstrom (G) von der ersten Ausgabestation (14) zu der ersten Extraktionsstation (26) erzeugt wird, wobei während des ersten Extraktionsschritts die Gase des ersten Gasstroms (F) und die Gase des zweiten Gasstroms (G) in dem Bereich der ersten Extraktionsstation (26) zusammentreffen, in deren Bereich eine Temperatur von mindestens 400 °C, insbesondere mindestens 600 °C, speziell mindestens 800 °C, herrscht.

9. Verfahren nach Anspruch 8, umfassend mindestens einen zweiten Gasextraktionsschritt, während dem in der Kühlkammer (16) vorhandene Gase in dem Bereich einer zweiten Extraktionsstation (21) aus der Kühlkammer (16) extrahiert werden, wobei während des zweiten Extraktionsschritts ein dritter Gasstrom (H) von der zweiten Eingabestation (17) zu der zweiten Extraktionsstation (21) erzeugt wird.

10. Verfahren nach Anspruch 8 oder 9, umfassend:
einen dritten Förderschritt, während dem die Basis-Keramikartikel (BC) durch mindestens eine Vorwärmkammer (27) hindurch entlang eines dritten Abschnitts (P3) des gegebenen Pfads von einer dritten Eingabestation (28) zu einer dritten Ausgabestation (29) gefördert werden;
einen weiteren Heizschritt, während dem die Basis-Keramikartikel (BC) von einer Raumtemperatur auf eine Anfangstemperatur erwärmt werden, während sie entlang des dritten Abschnitts (P3) des gegebenen Pfads zugeführt werden; und
einen dritten Gasextraktionsschritt, während dem Gase aus der Vorwärmkammer (27) extrahiert werden.

11. Ofen (4") zum Brennen von Basis-Keramikartikeln (BC), welche organische Verbindungen umfassen,
wobei der Ofen (4") umfasst:
- eine Fördereinrichtung (7) zum Fördern der Basis-Keramikartikel (BC) und von behandelten Keramikartikeln entlang eines gegebenen Pfads;
- mindestens eine Brennkammer (12), welche entlang des gegebenen Pfads angeordnet ist und eine erste Eingabestation (13) und eine erste Ausgabestation (14) aufweist, wobei die Fördereinrichtung (7) dazu ausgebildet ist, die Basis-Keramikartikel (BC) entlang eines ersten Abschnitts (P1) des gegebenen Pfads von der ersten Eingabestation (13) zu der ersten Ausgabestation (14) zu fördern;
- mindestens eine Heizeinrichtung (15), welche dazu ausgebildet ist, die Basis-Keramikartikel (BC) zu erwärmen, während sich die Basis-Keramikartikel (BC) entlang des ersten Abschnitts (P1) des gegebenen Pfads befinden, um die behandelten Keramikartikel zu erhalten;
- mindestens eine Kühlkammer (16), welche stromabwärts der Brennkammer entlang des gegebenen Pfads angeordnet ist und eine zweite Eingabestation (17) und eine zweite Ausgabestation (18) aufweist, wobei die Fördereinrichtung (7) dazu ausgebildet ist, die behandelten Keramikartikel entlang eines zweiten Abschnitts (P2) des gegebenen Pfads zu fördern, wobei der zweite Teilbereich (P2) sich von der zweiten Eingabestation (17) zu der zweiten Ausgabestation (18) erstreckt;
- mindestens eine Kühleinrichtung (19), welche dazu ausgebildet ist, die Temperatur der behandelten Keramikartikel zu reduzieren, während diese sich entlang des zweiten Abschnitts (P2) befinden, um Keramikprodukte (CP) zu erhalten;
**dadurch gekennzeichnet, dass** der Ofen (4") mindestens eine erste Gasextraktionseinrichtung (25) umfasst, welche dazu ausgebildet ist, Gas aus der Brennkammer (12) an einer ersten Extraktionsstation (26), welche zwischen der ersten Eingabestation (13) und der ersten Ausgabestation (14) und an der ersten Eingabestation (13) angeordnet ist, zu extrahieren und das extrahierte Gas zu einer äußeren Umgebung hin zu richten;
- wobei die erste Extraktionseinrichtung (25) dazu ausgebildet ist, einen ersten Gasstrom (F) von mindestens der ersten Ausgabestation (14) zu der ersten Extraktionsstation (26) zu erzeugen;
wobei an der ersten Extraktionsstation (26) eine Temperatur von mindestens 400 °C, insbesondere mindestens 600 °C, herrscht.

12. Ofen nach Anspruch 11, wobei die erste Extraktionsstation (26) in einem Abschnitt der Brennkammer (12) angeordnet ist, in dem die Temperatur im Gebrauch zwischen 500 °C und 800 °C, insbesondere zwischen 600 °C und 800 °C, liegt.

13. Anlage zur Herstellung von Keramikprodukten (CP) ausgehend von Basis-Keramikartikeln (BC), wobei die Anlage (1) umfasst: eine Dekorationseinheit (3), welche dazu ausgebildet ist, die Basis-Keramikartikel (BC) mit einer Tinte, welche organische Verbindungen umfasst, zu dekorieren, und einen Ofen (4") nach einem der Ansprüche 11 oder 12.

## Revendications

1. Four (4'') pour la cuisson d'articles en céramique de base (BC) comprenant des composés organiques ;
le four (4'') comprend :
- un dispositif de transport (7) pour transporter les articles en céramique de base (BC) et les articles en céramique traités le long d'un trajet donné ;
- au moins une chambre de cuisson (12), qui est agencée le long du trajet donné et qui comporte un premier poste d'entrée (13) et un premier poste de sortie (14) ; le dispositif de transport (7) est conçu pour transporter les articles en céramique de base (BC) le long d'une première partie (P1) du trajet donné du premier poste d'entrée (13) au premier poste de sortie (14) ;
- au moins un dispositif de chauffage (15), qui est conçu pour chauffer les articles en céramique de base (BC) alors que les articles en céramique de base (BC) sont le long de la première partie (P1) du trajet donné, de manière à obtenir les articles en céramique traités ;
- au moins une chambre de refroidissement (16), qui est agencée en aval de la chambre de cuisson le long du trajet donné et qui comporte un deuxième poste d'entrée (17) et un deuxième poste de sortie (18) ; le dispositif de transport (7) est conçu pour transporter les articles en céramique traités le long d'une deuxième partie (P2) du trajet donné ; la deuxième partie (P2) s'étendant du deuxième poste d'entrée (17) au deuxième poste de sortie (18) ;
- au moins un dispositif de refroidissement (19), qui est conçu pour réduire la température des articles en céramique traités alors qu'ils sont le long de la deuxième partie (P2), de manière à obtenir des produits en céramique (CP) ;
dans lequel le four (4") comprend au moins un premier dispositif d'extraction de gaz (25), qui est conçu pour extraire le gaz de la chambre de cuisson (12) au niveau d'un premier poste d'extraction (26), qui est interposé entre le premier poste d'entrée (13) et le premier poste de sortie (14) et qui est conçu pour diriger le gaz extrait vers un environnement externe ;
le four (4") étant **caractérisé en ce que** le premier dispositif d'extraction (25) est conçu pour générer un premier écoulement de gaz (F) au moins du premier poste d'entrée (13) vers le premier poste d'extraction (26) et un deuxième écoulement de gaz (G) au moins du premier poste de sortie (14) au premier poste d'extraction (26), de sorte que les gaz du premier écoulement de gaz (F) et les gaz du deuxième écoulement de gaz (G) se rencontrent au niveau du premier poste d'extraction (26), dans laquelle zone il y a, en utilisation, une température d'au moins 400 °C, en particulier d'au moins 600 °C, plus particulièrement d'au moins 800 °C ;
le premier poste d'extraction (26) étant agencé au niveau du premier poste d'entrée (13).

2. Four selon la revendication 1, dans lequel le premier poste d'extraction (26) est agencé dans une partie de la chambre de cuisson (12) dans laquelle la température est, en utilisation, entre 500 °C et 800 °C, en particulier entre 600 °C et 800 °C.

3. Four selon la revendication 1 ou 2, dans lequel le premier dispositif d'extraction (25) comprend une unité d'aspiration (51), qui est reliée de manière fluidique à la chambre de cuisson (12) dans la zone du premier poste d'extraction (26) et qui est conçue pour générer le premier écoulement de gaz (F) et le deuxième écoulement de gaz (G), en particulier le premier écoulement de gaz (F) a une première direction et le deuxième écoulement de gaz (G) a une deuxième direction, qui est opposée à la première direction.

4. Four selon l'une quelconque des revendications précédentes, et comprenant au moins un deuxième dispositif d'extraction de gaz (20), qui est conçu pour extraire le gaz de la chambre de refroidissement (16) dans la zone d'un deuxième poste d'extraction (21) ; le deuxième dispositif d'extraction (20) est conçu pour générer un troisième écoulement de gaz (H) du deuxième poste d'entrée (17) au deuxième poste d'extraction (21).

5. Four selon l'une quelconque des revendications précédentes, dans lequel la chambre de cuisson (12) comprend une section de précuisson (35) s'étendant du premier poste d'entrée (13) à un premier poste intermédiaire (36) de la chambre de cuisson, qui est agencé entre le premier poste d'entrée (13) et le premier poste de sortie (14) ;
le dispositif de chauffage (15) est conçu pour augmenter la température des articles en céramique de base (BC) pendant l'avance entre le premier poste d'entrée (13) et le premier poste intermédiaire (36), en particulier le dispositif de chauffage (15) est conçu pour maintenir la température de la section de précuisson (35) croissante dans une direction d'avance (A) des articles en céramique de base (BC) le long du trajet donné ; le premier poste d'extraction (26) est interposé entre le premier poste d'entrée (13) et le premier poste intermédiaire (36) ; en particulier la chambre de cuisson (12) comprend également une section de cuisson (37) s'étendant du premier poste intermédiaire (36) au premier poste de sortie (14) de la chambre de chauffage (12) et le dispositif de chauffage (15) est conçu pour maintenir la température de la section de cuisson (37) sensiblement constante dans la direction d'avance (A) ; en particulier entre 1000 °c et 1300 °C.

6. Four selon l'une quelconque des revendications précédentes, comprenant au moins une chambre de préchauffage (27), qui est agencée en amont de la chambre de cuisson (12) le long du trajet donné et qui comporte un troisième poste d'entrée (28) et un troisième poste de sortie (29) ;
le dispositif de transport (7) est conçu pour transporter les articles en céramique de base (BC) le long d'une troisième partie (P3) du trajet donné du troisième poste d'entrée (28) au troisième poste de sortie (29) ;
le dispositif de chauffage (15) est en outre conçu pour chauffer les articles en céramique de base (BC) d'une température ambiante à la température initiale alors que les articles en céramique de base (BC) sont transportés le long de la troisième partie (P3) ;
le four comprend, en outre, au moins un troisième dispositif d'extraction de gaz (30), qui est conçu pour extraire les gaz de la chambre de préchauffage (27) dans la zone d'un troisième poste d'extraction (31) de la chambre de préchauffage (27) ; en particulier, le four (4") comprend également une unité de commande, qui est conçue pour commander le troisième dispositif d'extraction (30) de manière à activer et désactiver le troisième dispositif d'extraction (30).

7. Installation pour la production de produits en céramique (CP) à partir d'articles en céramique de base (BC) ; l'installation (1) comprend une unité de décoration (3) conçue pour décorer les articles en céramique de base (BC) avec une encre comprenant des composés organiques, et un four (4") selon l'une quelconque des revendications précédentes.

8. Procédé pour la cuisson d'articles en céramique de base (BC) comprenant des composés organiques, le procédé comprend :
- une première étape de transport, pendant laquelle les articles en céramique de base (BC) sont transportés à travers au moins une chambre de cuisson (12) le long d'une première partie (P1) du trajet donné d'un premier poste d'entrée (13) à un premier poste de sortie (14) ;
- une étape de chauffage, pendant laquelle les articles en céramique de base (BC) sont chauffés alors qu'ils sont le long de la première partie (P1) du trajet donné, de manière à obtenir des articles en céramique traités ;
- une deuxième étape de transport, pendant laquelle les articles en céramique traités sont transportés à travers au moins une chambre de refroidissement (16) le long d'une deuxième partie (P2) du trajet donné d'un deuxième poste d'entrée (17) à un deuxième poste de sortie (18) de la chambre de refroidissement (16) ;
- une étape de refroidissement, pendant laquelle la température des articles en céramique traités est réduite alors qu'ils sont le long de la deuxième partie (P2) du trajet donné, de manière à obtenir des produits en céramique (CP) ;
le procédé comprend au moins une première étape d'extraction de gaz, pendant laquelle les gaz présents dans la chambre de cuisson (12) sont extraits de la chambre de cuisson (12) au niveau d'un premier poste d'extraction (26) interposé entre le premier poste d'entrée (13) et le premier poste de sortie (14) ;
dans lequel le premier poste d'extraction (26) est agencé au niveau du premier poste d'entrée (13) ; en particulier dans une partie de la chambre de cuisson (12) dans laquelle la température est, en utilisation, entre 500 °C et 800 °C, en particulier entre 600 °C et 800 °C ;
dans lequel, pendant la première étape d'extraction, il y a la production d'un premier écoulement de gaz (F) du premier poste d'entrée (13) au premier poste d'extraction (26) et d'un deuxième écoulement de gaz (G) du premier poste de sortie (14) au premier poste d'extraction (26) ; pendant la première étape d'extraction, les gaz du premier écoulement de gaz (F) et les gaz du deuxième écoulement de gaz (G) se rencontrent dans la zone du premier poste d'extraction (26), dans laquelle zone il y a une température d'au moins 400 °C, en particulier d'au moins 600 °C, plus particulièrement d'au moins 800 °C.

9. Procédé selon la revendication 8 et comprenant au moins une deuxième étape d'extraction de gaz, pendant laquelle les gaz présents dans la chambre de refroidissement (16) sont extrait de la chambre de refroidissement (16) dans la zone d'un deuxième poste d'extraction (21) ; pendant la deuxième étape d'extraction, il y a la production d'un troisième écoulement de gaz (H) du deuxième poste d'entrée (17) au deuxième poste d'extraction (21).

10. Procédé selon la revendication 8 ou 9 et comprenant :
une troisième étape de transport, pendant laquelle les articles en céramique de base (BC) sont transportés à travers au moins une chambre de préchauffage (27) le long d'une troisième partie (P3) du trajet donné d'un troisième poste d'entrée (28) à un troisième poste de sortie (29) ;
une étape de chauffage supplémentaire, pendant laquelle les articles en céramique de base (BC) sont chauffés d'une température ambiante à une température initiale alors qu'ils sont avancés le long de la troisième partie (P3) du trajet donné ; et
une troisième étape d'extraction de gaz, pendant laquelle les gaz sont extraits de la chambre de préchauffage (27) .

11. Four (4") pour la cuisson d'articles en céramique de base (BC) comprenant des composés organiques ;
le four (4") comprend :
- un dispositif de transport (7) pour transporter les articles en céramique de base (BC) et les articles en céramique traités le long d'un trajet donné ;
- au moins une chambre de cuisson (12), qui est agencée le long du trajet donné et qui comporte un premier poste d'entrée (13) et un premier poste de sortie (14) ; le dispositif de transport (7) est conçu pour transporter les articles en céramique de base (BC) le long d'une première partie (P1) du trajet donné du premier poste d'entrée (13) au premier poste de sortie (14) ;
- au moins un dispositif de chauffage (15), qui est conçu pour chauffer les articles en céramique de base (BC) alors que les articles en céramique de base (BC) sont le long de la première partie (P1) du trajet donné, de manière à obtenir les articles en céramique traités ;
- au moins une chambre de refroidissement (16), qui est agencée en aval de la chambre de cuisson le long du trajet donné et comportant un deuxième poste d'entrée (17) et un deuxième poste de sortie (18) ; le dispositif de transport (7) est conçu pour transporter les articles en céramique traités le long d'une deuxième partie (P2) du trajet donné ; la deuxième partie (P2) s'étendant du deuxième poste d'entrée (17) au deuxième poste de sortie (18) ;
- au moins un dispositif de refroidissement (19), qui est conçu pour réduire la température des articles en céramique traités alors qu'ils sont le long de la deuxième partie (P2), de manière à obtenir des produits en céramique (CP) ;
**caractérisé en ce que** le four (4") comprend au moins un premier dispositif d'extraction de gaz (25), qui est configuré pour extraire le gaz de la chambre de cuisson (12) au niveau d'un premier poste d'extraction (26), qui est interposé entre le premier poste d'entrée (13) et le premier poste de sortie (14) et au niveau du premier poste d'entrée (13) ; et pour diriger le gaz extrait vers un environnement externe ;
le premier dispositif d'extraction (25) est conçu pour générer un premier écoulement de gaz (G) au moins du premier poste de sortie (14) au premier poste d'extraction (26) ;
dans lequel, au niveau du premier poste d'extraction (26), il y a une température d'au moins 400 °C, en particulier d'au moins 600 °C.

12. Four selon la revendication 11, dans lequel le premier poste d'extraction (26) est agencé dans une partie de la chambre de cuisson (12) dans laquelle il y a, en utilisation, une température entre 500 °C et 800 °C, en particulier entre 600 °C et 800 °C.

13. Installation pour la production de produits en céramique (CP) à partir d'articles en céramique de base (BC) ; l'installation (1) comprend une unité de décoration (3) conçue pour décorer les articles en céramique de base (BC) avec une encre comprenant des composés organiques, et un four (4") selon la revendication 11 ou 12.
